## Europäisches Patentamt
## European Patent Office
## Office européen des brevets

(19)

(11) Publication number: **0 131 412**
**A2**

# (12) EUROPEAN PATENT APPLICATION

(21) Application number: 84304346.4

(22) Date of filing: 27.06.84

(51) Int. Cl.⁴: **F 16 F 9/36**
**F 16 F 9/06**

(30) Priority: 06.07.83 GB 8318312

(43) Date of publication of application:
16.01.85 Bulletin 85/3

(84) Designated Contracting States:
DE FR IT NL

(71) Applicant: LUCAS INDUSTRIES public limited company
Great King Street
Birmingham, B19 2XF(GB)

(72) Inventor: Basnett, Michael Neil
22 Pencommin Llangynidr
Near Crickhowell Powys South Wales(GB)

(74) Representative: Spall, Christopher John et al,
BARKER, BRETTELL & DUNCAN 138 Hagley Road
Edgbaston Birmingham B16 9PW(GB)

(54) Improvements in suspension struts for vehicles.

(57) In a mono-tube suspension strut a tubular extension (9) depending from a closure plug (6) for one end of a cylinder (2) carries at its lower end a seal (17) through which a piston-rod (15) projecting through the plug (6) works. The extension (9) is separate from the plug (6) and is provided at its upper end with an outwardly directed radial flange (10) of an external diameter substantially less than the internal diameter of the cylinder (2), and a seal (11) of cup-shaped cross-section, including a pair of radially spaced inner and outer annular lips (31, 32) depending from an annular web (30), is disposed in the annular space between the extension (9) and the cylinder (2). The web (30) is provided with an outwardly directed annular recess (33) in which the flange is sealingly received, the outer lip (32) seals against the cylinder (2) and the inner lip (31) seals against the extension (9). The extension (9) is retained in position by the pressure within the cylinder (2) which acts on the seal (11), in turn to clamp the flange (10) against the plug (6) and separate the lips (31, 32) to enhance the sealing effect against the cylinder (2) and the extension (9).

EP 0 131 412 A2

./...

FIG.1

## IMPROVEMENTS IN SUSPENSION STRUTS FOR VEHICLES

This invention relates to improvements in suspension struts for vehicles of the kind in which a piston adapted to work in a cylinder is carried by a piston-rod which passes through a closure for one end of the cylinder, and the piston-rod works through a seal at the inner end of a tubular extension which depends from the closure and surrounds the piston-rod, volumes of gas or air and hydraulic fluid being retained in the cylinder with the seal disposed at a position below the level of the fluid, and the piston being provided with at least one valve or restrictor which permits a limited flow of hydraulic fluid past the piston in both directions in response to relative movement between the cylinder and the piston.

Suspension struts of the kind set forth may act as dampers to damp out oscillations between parts of a vehicle which are relatively movable against the loading of suspension springs. The suspension springs may be combined into assemblies with such dampers.

In suspension struts of the kind set forth since the volume of gas or air is trapped in the annular chamber above the level of the hydraulic fluid, the gas or air is prevented from escaping past the seal by the presence of the hydraulic fluid, and the seal is immersed in the hydraulic fluid which acts as a lubricant to reduce friction between the piston-rod and the seal.

In known suspension struts of the kind set forth the closure and the tubular extension may be integral one with another, with a seal provided between the closure and the wall of the cylinder to prevent the gas or air escaping from the upper end of the cylinder. This limits the possibility of limited radial movement between the closure and the cylinder taking place in order to compensate for tolerance variations which may affect the concentricity between the cylinder, the closure, the extension, the piston and the piston-rod.

In GB-A-2 076 932 we disclose a suspension strut of the mono-tube type in which the tubular extension is separate from the closure and a single annular seal is clamped between the cylinder, a radial flange on the extension, and a portion of the extension which projects towards the closure from the radial flange. In this construction the flange is clamped against a shoulder in the wall of the cylinder, and a similar shoulder retains the closure in position. Compensation for lack of concentricity may be prevented by the engagement of the free edge of the radial flange with the wall of the cylinder due to its co-operation with the shoulder, and the clamping force must be adequate to deform the seal sufficiently to provide an effective seal between the extension and the cylinder.

According to our invention in a mono-tube suspension strut of the kind set forth the tubular extension is separate from the closure and is provided at its end adjacent to the closure with an outwardly directed radial flange of an external diameter substantially less than that of the internal diameter of the cylinder, and a seal of cup-shaped cross-section, including a pair of radially spaced inner and outer annular lips depending from an annular web, is disposed in the annular space between the extension and the cylinder with the web sealing against the flange, the outer face of the outer lip sealing against the cylinder, and the inner face of the inner lip sealing against the extension.

3

Since the material of the seal of cup-shaped outline provides a radial sealing connection between the cylinder and the extension, and no rigid connection is otherwise provided, the tubular extension can deflect against the resilience in the seal to compensate for tolerance variations and thereby ensure concentricity between the closure, the piston-rod and the extension.

The closure is retained in the cylinder by suitable retaining means, but no other retainer is required for the extension since it is retained in position by the pressure within the cylinder which acts on the seal, in turn to clamp the flange against the closure and separate the lips to enhance the sealing effect against the cylinder and the extension.

Preferably the web is provided in its face adjacent to the closure with a recess which extends outwardly from the inner lip and in which the radial flange is received with its outer face substantially flush with the remainder of that face of the web.

Our construction is considerably simplified and assembly is facilitated.

One embodiment of our invention is illustrated in the accompanying drawings in which:-

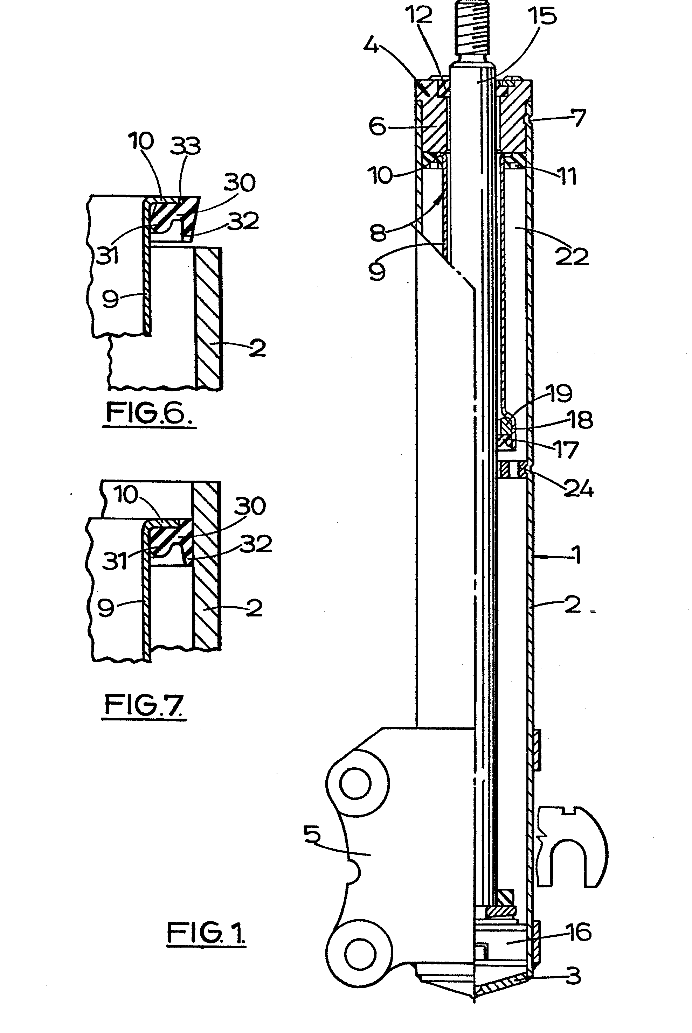

Figure 1 is a longitudinal section of a suspension strut of the mono-tube type;

Figure 2 is a longitudinal section through the tubular extension of Figure 1;

Figure 3 is a view of one end of the sealing device of Figure 1;

4

Figure 4 is a view of the opposite end of the sealing device;

Figure 5 is a section on the line 5-5 of Figure 4;

Figure 6 is a section through a modified sealing device in an unstressed condition; and

Figure 7 is a section similar to Figure 6 with the sealing device in position in the cylindrical member.

The mono-tube suspension strut illustrated in the drawings comprises a cylinder 1 in the form of a unitary cylindrical member 2 which is closed at its lower end by a closure 3 and at its upper end by a closure assembly 4. A bracket 5 fixed to the cylinder 1 at that lower end is adapted to carry a wheel (not shown).

The closure assembly 4 comprises a closure in the form of an end plug 6 which is secured in position by a radial rib 7 pressed inwardly from the wall of the member 2, a tubular support 8 separate from the end plug 6 and comprising a cylindrical extension 9 which depends from an integral outwardly directed radial flange 10, and an annular sealing device 11 clamped between adjacent faces of the the flange 10 the extension 9 and the cylinder 2.

A piston-rod 15 projects through a bearing housed in an opening in the plug 6, a seal 12 in the plug 6, and the bore of the extension 9 into the interior of the cylindrical member 2 and carries, at its lower free end, a piston 16 which, in turn, works in the bore of the cylindrical member 2. The piston-rod 15 works through an elastomeric seal 17 at the free inner end of the extension 9. The seal 17 is retained within a distal portion of the extension 9 which is of increased diameter to define a cylindrical retainer 18 and the seal 17 is backed by a support ring 19 mounted in the retainer 18 against a shoulder at the change in diameter. The support ring 19 may be of a material, such as a synthetic plastics material, suitably P.T.F.E., which has a good bearing performance, although it does not function as a bearing. The ring 19 acts to prevent extrusion of the material of the seal 17.

The piston 16 is of known construction and is provided with oppositely acting one-way valves or restrictors.

The piston-rod 15 is secured at its upper end to a part of the chassis of frame of the vehicle.

Substantially the whole of the load on the wheel is supported by a suspension spring (not shown) which may surround the cylindrical member 2 and abut at its lower end against a flange 21 on the cylinder 1, and a complementary abutment on the piston rod 10. A small proportion of the load is supported by a volume of gas or air under pressure in a pressure chamber 22 within the cylinder 1 and which is defined by the annular space between the closure assembly 4, the member 2 and the extension 9. The remainder of the interior of the cylindrical member 2 is filled with hydraulic fluid to a level well above the height of the elastomeric seal 17 at the lower end of the extension 9.

Relative axial movement between the chassis or frame of the vehicle causes oscillations in the suspension spring to occur. These oscillations are damped out by relative axial movement between the piston 16 and the

6

cylindrical member 2 with the piston 16 working against the hydraulic fluid due to resistance to flow through the piston 16 by the one-way valves or restrictors in the piston 16.

The volume of the entering piston-rod 15 is accommodated by, and causes further pressurisation of, the gas or air.

Arranging for the elastomeric seal 17 to be located below the level of the hydraulic fluid ensures that the gas or air is separated from the seal 17 by the fluid. This means that the gas or air is prevented from escaping past the seal 17 by the presence of the fluid itself.

In order to protect the seal 17 from damage by inpact from the piston 16, a radial stop 24 in the form of an apertured ring, which may also form a guide for the piston-rod 10, is housed in the cylindrical member 2 to limit movement of the piston 16 in a direction towards the seal 17.

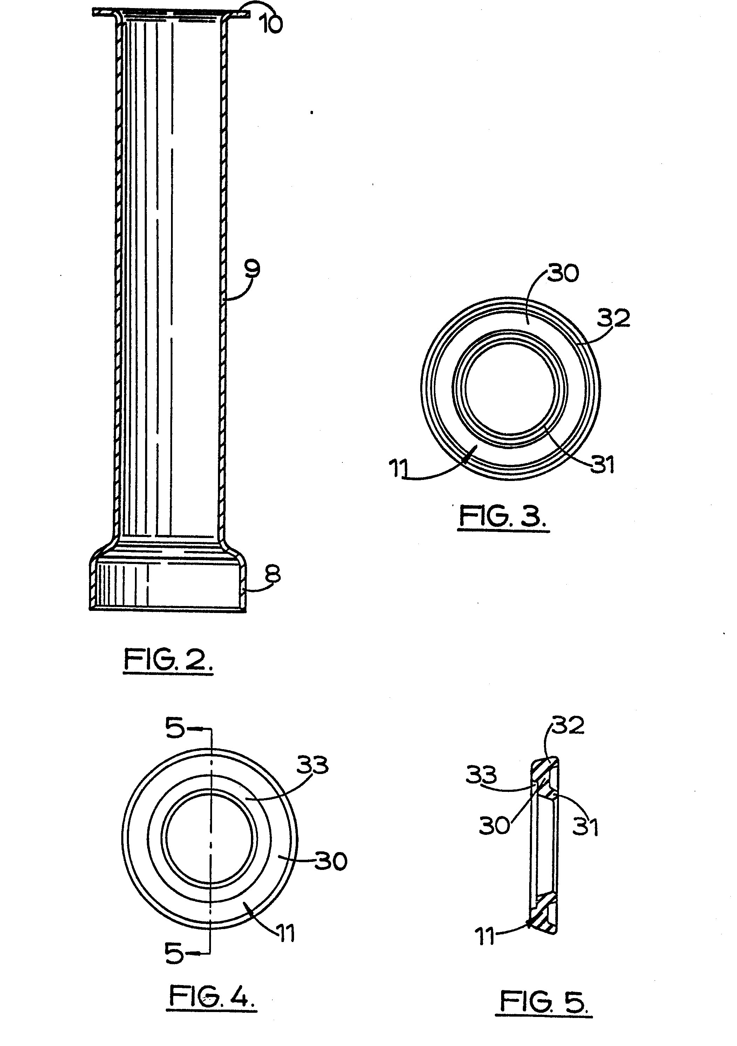

The sealing device 11 is shown in detail in Figures 3 to 5 of the accompanying drawings and comprises an annular sealing ring of elastomeric material and of cup-shaped cross-section. The sealing ring comprises an annular web 30 from which depends integral inner and outer axially extending annular lips 31 and 32. In an unstressed condition the lips 31 and 32 diverge away from the web 30. An annular recess 33 is provided in the face of the web 30 remote from the lips 31 and 32, and the recess 33 extends radially outwards from the inner peripheral edge of the web 30, the recess 33 being of a depth substantially equal to the thickness to the flange 10, and of a diameter substantially equal to the external diameter of the flange 10.

When positioned in the strut, the face of the web 30 containing the recess faces the plug 6 with the flange 10 on the extension 9 being received within the recess 33. The outer edge of the outer lip 32 seals against the inner wall of the cylindrical member 2, and the inner edge of the inner lip 31 seals against the outer face of the extension 9. In the position shown in the strut the two lips 31 and 32 are deformed towards each other by their engagements with the extension 9 and the cylindrical member 2 so that the two lips 31 and 32 are substantially concentric. This enhances the sealing engagement, particularly since the pressure within the strut urges the sealing device 11 towards the plug 6 to clamp the flange 10 firmly against it and the pressure also tends to separate the lips 31 and 32 and enhance still further the sealing effects of the lips 31 and 32 with the extension 9 and the cylindrical member 2, respectively.

The tubular extension 9 can move radially against the resilience in the material of the sealing device 11 in order to compensate for tolerance variations and thereby ensure the concentricity of the components of the strut. In addition, the outer diameter of the flange 10 can be varied with respect to the diameter of the recess 33 to give varying predetermined degrees of articulation/resilient loading.

In the modified construction illustrated in Figure 6 of the drawings the sealing device 11 is shown in a free and unstressed condition. The outer edge of the external lip 32 and the web 30 is of frusto-conical outline to facilitate manufacture. When the sealing device 11 is received within the cylindrical member 2 as shown in Figure 7, the outer edge of the lip 32 and the web 30 have a close sealing engagement with the wall of the member 2, and the sealing device 11 is deformed with the inner lip 31 engaging sealingly against the outer face of the extension 9.

## CLAIMS

1. A suspension strut for a vehicle in which a piston (16) adapted to work in a cylinder (2) is carried by a piston-rod (15) which passes through a closure (6) for one end of the cylinder, and the piston-rod works through a seal (17) at the inner end of a tubular extension (8) which depends from the closure and surrounds the piston-rod, volumes of gas or air and hydraulic fluid being retained in the cylinder with the seal disposed at a position below the level of the fluid, and the piston being provided with at least one valve or restrictor which permits a limited flow of hydraulic fluid past the piston in both directions in response to relative movement between the cylinder and the piston, characterised in that the tubular extension (8) is separate from the closure (6) and is provided at its end adjacent to the closure with an outwardly directed radial flange (10) of an external diameter substantially less than that of the internal diameter of the cylinder, and a seal (11) of cup-shaped cross-section, including a pair of radially spaced inner and outer annular lips (31, 32) depending from an annular web (30), is disposed in an annular space (22) between the extension and the cylinder with the web sealing against the flange, the outer face of the outer lip sealing against the cylinder, and the inner face of the inner lip sealing against the extension.

2. A strut according to claim 1, characterised in that, in a free and unstressed condition, the lips (31, 32) diverge away from the web (30).

3. A strut according to claim 2, characterised in that, in the free and unstressed condition, the outer end of the outer lip (32) and of the web (30) is of frusto-conical outline.

4. A strut according to any preceding claim, characterised in that retaining means (7) is provided to retain the closure (6) in the cylinder (2) and the extension (8) is otherwise retained within the cylinder by the pressure within the cylinder which acts on the seal (11), in turn to clamp the flange (10) against the closure (6) and separate the lips (31, 32) to enhance the sealing effect against the cylinder and the extension.

5. A strut according to any preceding claim, characterised in that the web (30) is provided in its face adjacent to the closure with a recess (33) which extends outwardly from the inner lip (31) and in which the radial flange (10) is received.

6. A strut according to claim 5, characterised in that the depth of the recess (33) is substantially equal to the thickness of the flange (10) so that the outer face of the flange is substantially flush with the remainder of that face of the web (30).

7. A strut as claimed in claim 5 or claim 6, characterised in that the external diameter of the flange (10) is substantially equal to the diameter of the recess (33).

8. A strut as claimed in claim 5 or claim 6, characterised in that the external diameter of the flange (10) is less than the diameter of the recess (33).

0131412

1/2

FIG.6.

FIG.7

FIG.1.

0131412

FIG. 2.

FIG. 3.

FIG. 4.

FIG. 5.